# EUROPEAN PATENT APPLICATION

(11) **EP 2 551 755 A1**
(43) Date of publication of application: **30.01.2013**
(21) Application number: 11759121.4
(22) Date of filing: 22.02.2011
(51) Int. Cl.: G06F 3/042, G06F 3/041

(54) **COORDINATE INPUT DEVICE, AND PROGRAM**

(30) Priority: 24.03.2010 JP 2010068770
(71) Applicant: Hitachi Solutions, Ltd., Tokyo 140-0002 (JP)
(72) Inventor: KANO Shigeru, Tokyo 140-0002 (JP); ISHIDA Hitoshi, Tokyo 140-0002 (JP)
(74) Representative: Liesegang, Eva
(86) International application number: PCT/JP2011/053758
(87) International publication number: WO 2011/118313

(57) **Abstract**

With respect to a coordinate input device comprising an operation detection plane at a position in front of a display surface or projection surface, contact with the display surface or projection surface, or the absence thereof, by an input object having a round tip is accurately determined. The coordinate input device provided comprises: processing means that detects a size of the input object blocking detection light that travels along the operation detection plane; processing means that generates a down event of the input object when, after blockage of the detection light is initially detected, it is detected that the size has become greater than a first threshold; and processing means that generates an up event of the input object when, following detection of a maximum value of the size, it is detected that the size has become smaller than a second threshold.

## Description

### Technical Field

The present invention relates to an optical coordinate input device comprising an operational input detection plane in front of a display surface or projection surface, as well as to a program that controls the detection process thereof.

### Background Art

Interactive whiteboards (IWBs) have become increasingly popular in recent years. Interactive whiteboards comprise a combination of a display device or projection device and a coordinate input device. It is noted that for the display device that displays an operation screen, a plasma display device, a liquid crystal display device, or some other flat display device is used, for example. For the projection device that projects an operation screen onto a screen or a whiteboard, a front projector or a rear projector is used. With interactive whiteboards, it is possible to draw objects (text and images) with one's finger or an electronic pen as if drawing objects on a blackboard with a chalk.

For coordinate input devices of this type, tablets, touch panels, etc., have conventionally been used. Tablets and touch panels employ such technologies as electromagnetic induction, ultrasound, etc. On the other hand, in recent years, coordinate input devices employing image sensors have shown a steady increase. Coordinate input devices that employ image sensors are advantageous over conventional types in terms of drawing responsiveness, as well as their resistance to infrared light, sunlight, temperature change, and other types of external noise. Patent Literature 1 is a document relating to such a coordinate input device employing image sensors.

### Citation List

### Patent Literature

Patent Literature 1: JP Patent No. 3931030
Patent Literature 2: JP Patent No. 3986710
Patent Literature 3: JP Patent No. 4043178
Patent Literature 4: JP Patent Application Publication (Kokai) No. 2001-290583 A

### Summary of Invention

### Technical Problem

With a coordinate input device that uses an image sensor, a light beam is emitted parallel to an operation screen from a light source, and the presence/absence of operational input is detected by detecting whether or not there is an object that blocks the light beam. However, while this detection method may be adequate for detecting simple operations such as pressing a button displayed on the screen, etc., it is inadequate for writing a text string, etc. By way of example, the strokes of a given drawing object may become merged, or trailing may occur with each stroke like a tail.

In this regard, Patent Literatures 1 and 4 attempt to solve these problems by placing the axis of a light beam from a light source to a retroreflective member and the axis of the reflected light beam from the retroreflective member to the image sensor near the surface of the operation screen.

In addition, Patent Literature 3 attempts to solve these problems by measuring the time elapsed from when an object blocking the axis of a light beam appears up to when actual contact with the surface of an electronic board is made.

However, there is a problem with conventional techniques in that natural text string input still cannot be performed.

### Solution to Problem

With respect to coordinate input devices of the type where blockage of a light beam is detected using an image sensor, not only a dedicated electronic pen, but one's finger or a pointer may also be used for operation. The tips of electronic pens and pointers in this case, as well as one's fingers, needless to say, are round. This is to prevent electronic pens or pointers from causing damage to the surface of the display surface or projection surface.

By way of example, when an input object comes into contact with an operation screen, the tip of the input object first blocks detection light over a small area, and, following a subsequent and gradual increase in blocking area (size), the tip of the input object comes into contact with the operation screen. On the other hand, when an input object falls out of contact with the operation screen, the blocking area (size) changes in such a manner as to gradually become smaller.

As such, the present inventors propose a contact/no-contact detection technique focusing on this roundness of the tip portion. Specifically, there is proposed a coordinate input device that comprises an operational input detection plane at a position in front of a display surface or projection surface, and that optically detects coordinates at which an input object with a round tip traverses the coordinate detection plane, the coordinate input device comprising: (a) a processing function that detects the size of the input object blocking detection light which travels along the coordinate detection plane; (b) a processing function that generates a down event of the input object when, after initially detecting blockage of the detection light, it is detected that the size has become greater than a first threshold; and (c) a processing function that generates an up event of the input object when, after detecting a maximum value for the size, it is detected that the size has become smaller than a second threshold.

### Advantageous Effects of Invention

With the present invention, a change in the size of an input object blocking detection light may be regarded as a precursor to a change in the contact/no-contact state of the input object. Thus, the contact/no-contact state may be detected at more natural timings as compared to when merely the presence/absence of a blocking object is determined. It is thus possible to better prevent strokes from becoming merged when writing a text string, or trailing from occurring with each stroke like a tail.

### Brief Description of Drawings

Fig. 1 is a system configuration diagram showing an example of an embodiment of an electronic board system according to the present invention.
Fig. 2 is a diagram illustrating a cross-sectional structure of a coordinate input device.
Fig. 3 is a diagram illustrating a scene where the tip of a finger approaches the surface of an operation screen.
Fig. 4 is a diagram illustrating the relationship between a finger tip and its shadow.
Fig. 5 is a diagram illustrating changes in the thickness of a shadow with respect to the positional relationship between a coordinate detection plane and the tip of a finger.
Fig. 6 is a flowchart illustrating a software process of a contact/no-contact detection device.
Fig. 7 is a diagram illustrating the connective relationship among electronic circuits forming a coordinate input device.

### Description of Embodiments

Examples of embodiments of the invention are described below based on the drawings. It is noted that all of the embodiments that follow are examples, and that the present invention encompasses systems that are realized by combining any of the functions described in the present specification, systems that are realized by replacing some of the functions described in the present specification with well-known techniques, and systems in which well-known techniques are incorporated in addition to the functions described in the present specification. In addition, the functions performed in the later-described examples are realized as programs executed on a computer. However, the programs may also be realized via hardware in part or in whole.

### (Configuration of Electronic Board System)

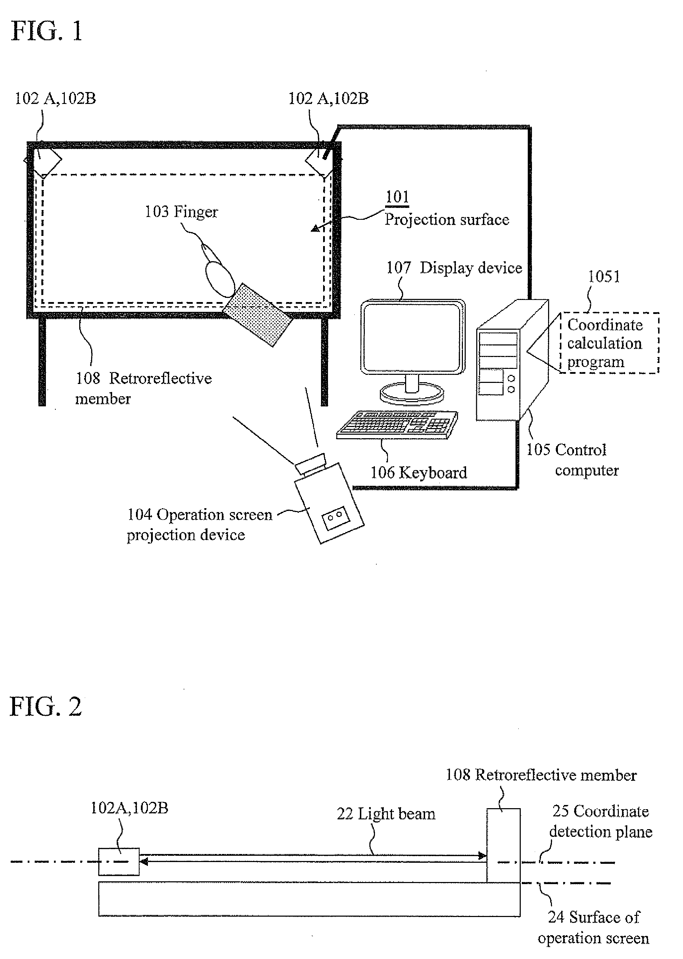

Fig. 1 shows an example of an embodiment of an electronic board system. The electronic board system shown in Fig. 1 comprises: a projection surface 101; light sources 102A; image sensors 102B; an operation screen projection device 104; a control computer 105; a keyboard 106 and display device 107 attached to the control computer 105; and a retroreflective member 108.

In the case of this example, the coordinate input device has a structure where the light sources 102A, the image sensors 102B and the retroreflective member 108 are attached to a rectangular frame (device main body). It is noted that a finger 103 is used for operational input, although an electronic pen or a stylus pen (pointer) may also be used for operational input.

The coordinate input device is disposed at a position in front of a screen or whiteboard onto which an operation screen is projected. In other words, a detection plane for operational input is formed at a position in front of the screen or whiteboard. Although the operation screen is projected in this example, other conceivable configurations include ones where it is disposed at a position in front of a display device such as a flat display, etc., and ones where such display devices are integrated with the frame. In addition, the input area intended for coordinate input of an input object need not be a large area as in screens and whiteboards, and may instead be a small area as in mobile phones, electronic books, and other portable terminals.

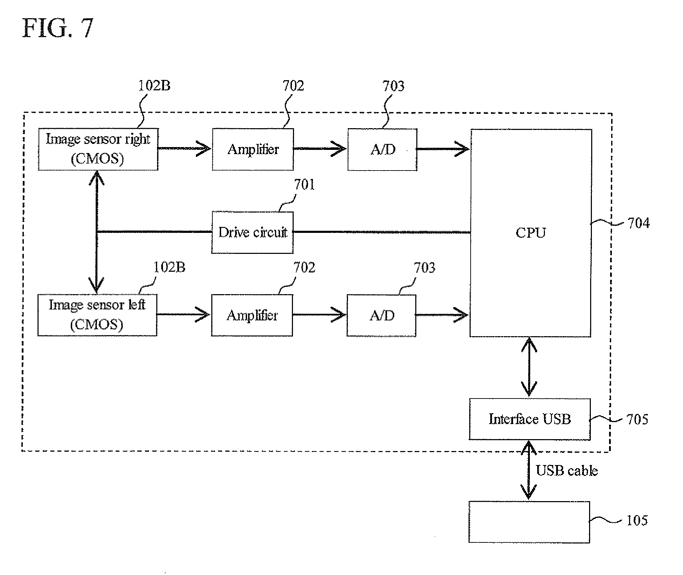

The connective relationship among electronic circuits forming the coordinate input device is shown in Fig. 7. The image sensors 102B are driven by a drive circuit 701, and the operation of the drive circuit 701 is controlled by a CPU 704. The drive circuit 701 provides screen import timings for the two image sensors 102B on the left and right. Image signals outputted from the image sensors 102B are amplified at amplifiers 702, and are subsequently inputted to analog/digital conversion circuits (A/D) 703, where they are converted to a digital signal format. The CPU 704 converts imaging data corresponding to the two image sensors 102B on the left and right into a predetermined transmission format, feeds it to an interface USB 705, and outputs it to the control computer 105 via a USB cable. It is noted that although Fig. 7 assumes a case where the light sources 102A are constantly emitting light, if it is necessary to control the light emission timing of the light sources 102A, the light sources 102A may be connected to an unillustrated drive circuit controlled by the CPU 704, thereby altering the light emission timing of infrared light.

The operation screen projection device 104 is used to project onto the screen or whiteboard the operation screen, as well as text and objects that have been inputted with an input object. It is assumed that the screen projected by the operation screen projection device 104 and the screen displayed on the display device 107 are the same.

The control computer 105 has functions comparable to a general-purpose personal computer, and on its internal memory is stored a coordinate calculation program 1051 that calculates the coordinates pointed at by the finger 103 based on the images captured by the image sensors 102B and on the principles of triangulation. In addition to the above, there are also stored on the internal memory a display content control program that processes text objects and image objects, and an event generation program that detects operational input by an input object and generates an event corresponding to the detected state.

Although the coordinate calculation program 1051 is run on the control computer 105 in this example, it may instead by executed by the CPU 704 within the coordinate input device, or it may also be executed within the operation screen projection device 104. The implementation of this function may be in the form of hardware (e.g., semiconductor integrated circuits, processing boards), or in the form of programs (e.g., firmware, applications).

In the case of this example, the coordinate input device used is of a type that uses light (e.g., infrared light) that is emitted parallel to the surface onto which the operation screen is projected, and that detects the position at which an input object (e.g., the finger 103) blocks the light through the principles of triangulation. By way of example, the two light sources 102A (e.g., infrared light sources) and the image sensors (imaging devices) 102B are disposed at both ends of the upper side of the rectangular frame or near the center of the upper side. By way of example, if the two light sources 102A are disposed at both ends on the left and right of the upper side, each of the light sources 102A emits a light beam towards, or scans therewith, the entire length of the side opposite where it is located as well as the entire length of the lower side. In this case, the view angle of the image sensors 102B is approximately 90°. It is noted that, if the two light sources 102A are disposed near the center of the upper side, the emission angle of each of the light sources 102A and the view angle of the image sensors 102B are both set to approximately 180°.

The retroreflective member 108 is disposed on the inner sides (the surfaces facing the light beam) of the frame at the three sides other than the upper side. Thus, the light that is incident on the retroreflective member 108 is reflected in the same direction as the incident direction. This reflected light is imaged with the image sensors 102B disposed near the light sources. When an input object blocks the light beam, a shadow is created in the images captured by the image sensors 102B. Based on the positional information of the shadow imaged by the left and right pair of image sensors 102B, the coordinate position of the input object is calculated according to the principles of triangulation.

The calculating of coordinates itself is carried out by the coordinate calculation program 1051 of the control computer 105. Accordingly, in the case of this example, imaging data is outputted to the control computer 105 from the image sensors 102B. It is noted that, when this type of coordinate input device is used, the control computer 105 is able to simultaneously calculate the coordinates of a plurality of input objects.

### (Cross-Sectional Structure of Coordinate Input Device)

A cross-sectional structure of a coordinate input device that detects an operation position of an input object is shown in Fig. 2. It is noted that Fig. 2 is a cross-sectional structure of a screen center portion. A light beam 22 emitted from the light source 102A is emitted parallel to an operation screen surface (projection surface) 24, and, after hitting the retroreflective member 108, is reflected parallel to the incident direction. It is noted that the retroreflective member 108 is, by way of example, a well-known member having a corner cube structure and which is capable of reflecting a light beam parallel to its incident direction regardless of the incident angle. This reflected light beam is imaged by the image sensor 102B. Between the surface 24 of the operation screen (display surface or projection surface) and the light beam 22, there is provided a slight gap to allow for surface unevenness, or warping caused by the projection surface's (or display surface's) own weight, and so forth.

### (Detection of Finger Tip Operation)

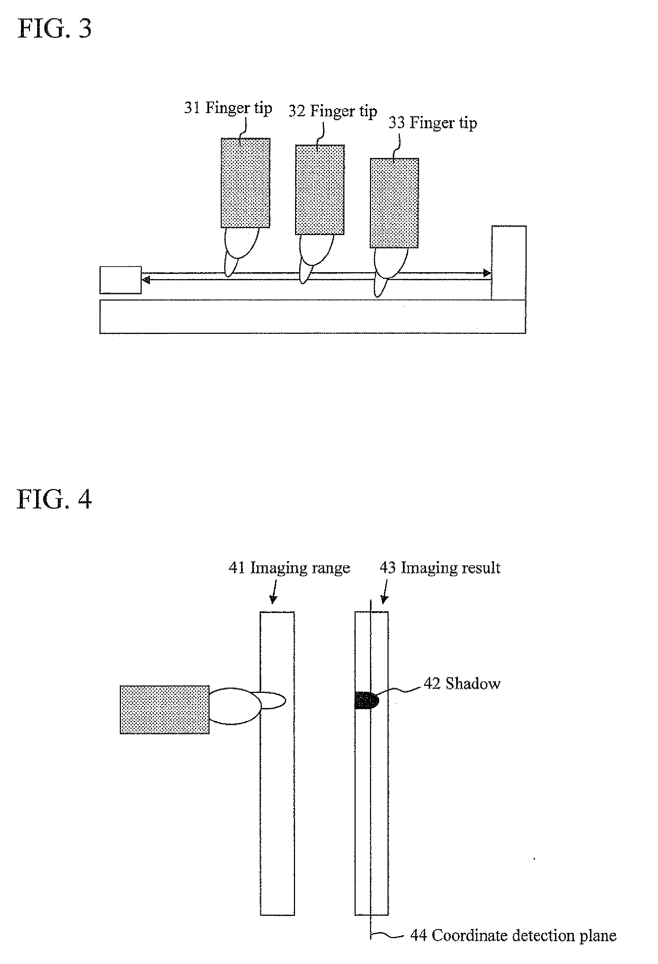

The relationship between the distance from the tip of a finger to the surface of the operation screen and light blockage is illustrated in Fig. 3. Finger tip 31 represents a state where just the tip portion has been inserted at a position blocking the light beam. Finger tip 32 represents a state where the finger has been inserted a little further. Finger tip 33 represents a state where the finger has been inserted until it comes into contact with the surface of the operation screen. Thus, even for a case where the tip of a finger blocks the light beam, there are roughly three conceivable states.

### (How a Shadow is Created due to Light Blockage)

The diagram on the left in Fig. 4 shows the imaging of a light beam being blocked by the tip of a finger with an image sensor. An imaging range 41 of the image sensor is given some width to allow adjustments of warps in the projection surface or display surface of the operation screen, of attachment variation at the time of device assembly, etc. The diagram on the right in Fig. 4 illustrates a situation where imaging has been performed with the image sensor in the direction of the retroreflective member while a finger is placed within the imaging range. As shown in the diagram on the right, the finger blocking the light beam appears in an imaging result 43 as a shadow 42. A coordinate detection plane 44 is set up within this imaging result (imaging data) 43. In the case of this example, it is set up in the center portion of the imaging result 43. It becomes possible to determine whether or not the finger tip is pressing against the operation screen for operational input based on whether or not the shadow 42 crosses the coordinate detection plane 44. This determination process is carried out by the coordinate calculation program 1051.

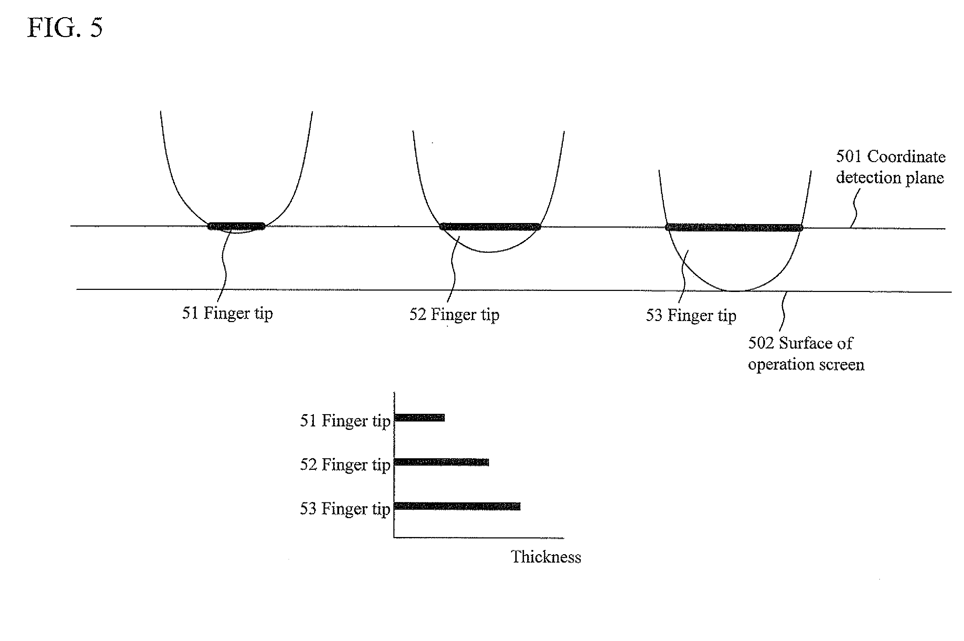

Fig. 5 is an enlarged view showing a finger tip crossing a coordinate detection plane 501. As in Fig. 3, three states are shown, where finger tip 51 represents a case where just the tip crosses the coordinate detection plane 501, finger tip 53 represents a case where the finger tip is in contact with a surface 502 of the operation screen, and finger tip 52 represents a case where it is located midway between finger tip 51 and finger tip 53. Comparing these three states, it can be seen that the thickness (length) of the shadow of the finger traversing the coordinate detection plane 501, as indicated by the thick lines, varies from state to state.

The graph shown in the lower part of Fig. 5 represents the relationship between the three states corresponding to the insertion positions of the finger tip and the thickness (length) of the corresponding shadows formed in the coordinate detection plane 501. It is speculated that the detected thickness will vary depending on the shape of the finger tip of each individual user and on the position at which the coordinate detection plane 501 is placed. In the case of the example shown in Fig. 5, there is a two-fold, or greater, difference in the detected thicknesses between the case of finger tip 51 and the case of finger tip 53.

### (Flowchart of Coordinate Calculation Function)

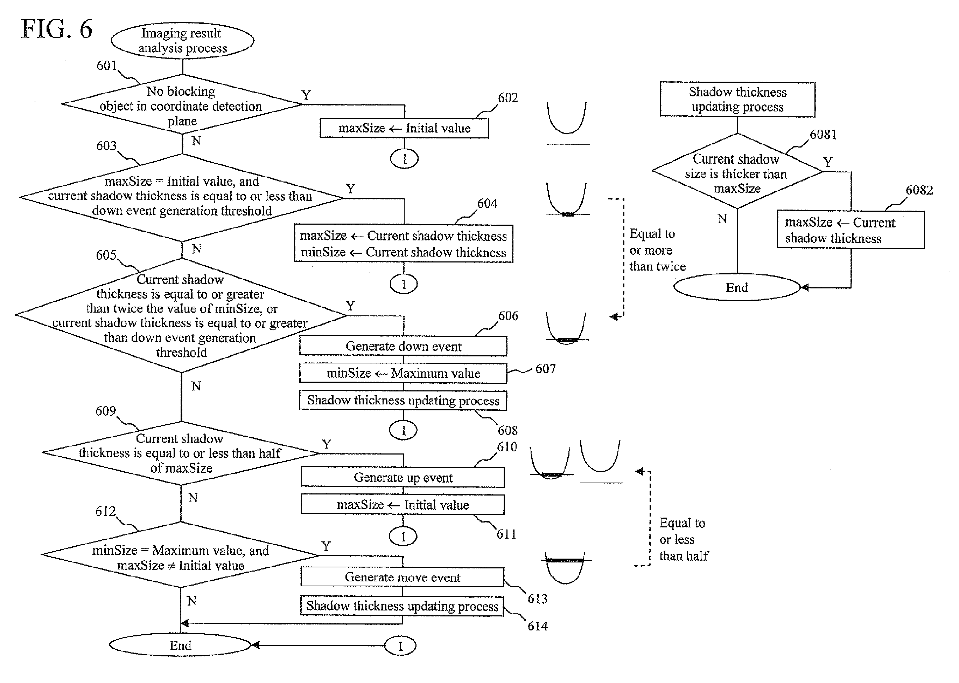

A processing operation for reliably detecting down operations and up operations is described below. A flowchart for determining contact/no-contact by a finger, etc., with respect to an operation screen is shown in Fig. 6. This determination process is executed as part of the functions of the coordinate calculation program 1051. Descriptions are provided below with the processor executing the program as the subject of each sentence.

First, in an imaging result analysis process that is repeatedly executed at short intervals, the processor determines whether or not there is a blocking object (shadow) in the coordinate detection plane (step 601).

If there is no blocking object (if step 601 returns an affirmative result), the processor sets an initial value for maxSize, which holds the maximum value of the thickness of the shadow (step 602). This initial value is used as a flag indicating that no blocking object is present.

If the presence of a blocking object is detected (if step 601 returns a negative result), the processor determines whether or not the value of maxSize is the initial value and whether or not the current shadow thickness is equal to or less than a threshold for generating a down event (step 603). The second determination condition is used for the purpose of preventing the process from proceeding to step 604 when a shadow that is too large is detected.

If the two conditions in step 603 are simultaneously satisfied (if step 603 returns an affirmative result), the processor stores the current shadow thickness in both maxSize and minSize (step 604). This process corresponds to registering the initial detection value for the thickness of the shadow that has actually been detected.

On the other hand, if either of the two conditions in step 603 is not satisfied (if step 603 returns a negative result), the processor further executes the following determination process (step 605). Specifically, the processor determines whether or not the current shadow thickness is equal to or greater than twice the value of maxSize, or whether or not the current shadow thickness is equal to or greater than the threshold for generating a down event (step 605).

If either of the two conditions in step 605 is satisfied (if step 605 returns an affirmative result), the processor generates a down event (step 606), sets midSize to the maximum value (step 607), and executes a shadow thickness updating process (step 608).

This maximum value is used as a flag for making a determination regarding the occurrence of a down event. It is noted that in the shadow thickness updating process, the processor determines whether or not the current shadow size is thicker than maxSize (step 6081). If an affirmative result is obtained, the processor substitutes the current shadow thickness into maxSize (step 6082), whereas if a negative result is obtained, maxSize is left unchanged. In other words, maxSize is updated only when the previous detection value is exceeded.

If a negative result is obtained in step 605, the processor determines whether or not the current shadow thickness is equal to or less than half the value of maxSize (step 609).

If an affirmative result is obtained in step 609, the processor generates an up event (step 610), and maxSize is set to an initial value (step 611). It is noted that in this case, both a case where the shadow has become smaller and a case where the shadow itself has disappeared are included. The initial value in this case signifies that an up event has occurred.

If a negative result is obtained in step 609, the processor determines both whether minSize is a maximum value and whether maxSize is not an initial value (step 612). In other words, the processor determines whether or not a down event has occurred while an up event has not yet occurred.

If an affirmative result is obtained in step 612, the processor generates a move event (step 613), and updates shadow thickness to the current value (step 614). Through this process, the change in thickness that occurred between a down event and an up event is recorded.

If a negative result is obtained in step 612, the processor terminates one cycle of the process.

### (Other Examples)

In the case of the example above, it is determined in step 605 whether or not the current shadow thickness is equal to or greater than twice the value of minSize. However, to allow for cases where an object with a square tip is used or cases where a quick pressing action is performed with a finger, and so forth, it is preferable that the processes of step 606 and onward be performed if, in addition to the conditions in step 605, the shadow is equal to or greater than a given size.

In addition, although an up event is generated in step 610, it is preferable that it be determined whether or not a down event has occurred in step 606, and that an up event not be generated unless it has been confirmed that a down event has occurred.

Further, although maxSize is set to an initial value in step 611, just a determination result as to whether or not an up event has been generated may be stored in this step instead, and the processes of step 606 and onward may be executed if, in addition to the conditions in step 605, an up event has already occurred, and the current shadow thickness is equal to or greater than half the value of maxSize. By providing such a process, it is possible to make a down process be performed when the shadow becomes thick again after having become thin once. Thus, it is possible to draw a text string without having to consciously move the finger away from the surface of the operation screen.

Further, with systems in which image sensors are employed, the thickness of the shadow varies depending on where on the surface of the operation screen a blocking object is placed. By way of example, at a position near the image sensors, the thickness of the shadow of the blocking object increases, whereas at a position further away, the thickness of the shadow of the blocking object decreases. Thus, when an obstacle is moved from a position near the image sensors towards a position further away, the thickness of the shadow will appear to decrease. In this case, if an up event were to be generated based solely on changes in the thickness of the shadow, it would give rise to results the operator may not have anticipated.

In order to avoid the above, it is preferable that the contact/no-contact determination process described in the example not be used if the input object (blocking object) has moved a given distance or more. A strict contact/no-contact determination is only necessary when writing a text string or when delicate operations are called for, and since moving a blocking object by a given distance or more may be deemed not to be the drawing of text, or any delicate operation, it does not become an issue. As for what kind of distance should be defined for the given distance, one may define how big the size of each stroke of a text string is to be, and apply that value.

In addition, in the above-discussed example, descriptions have been provided with respect to a case where the down event determination threshold was defined as twice the initial size, and the up event determination threshold as one half of the maximum value. However, it is preferable that each determination threshold be individually adjustable. By having each determination threshold be adjustable, it is possible to adjust the "feel of writing."

In addition, by setting determination threshold A for down events to a low value and determination threshold B for up events to a high value (>A), contact states become more readily identifiable, while making determinations of a no-contact state less likely. Consequently, it creates the impression of being able to write text strings with a lighter touch.

In addition, by setting determination threshold A for down events to a high value and determination threshold B for up events to a low value (<A), it creates the impression of being able to write text strings with a strong touch.

### Reference Signs List

- 101: Proj ection surface
- 102A: Light source
- 102B: Image sensor
- 103: Finger
- 104: Operation screen projection device
- 105: Control computer
- 1051: Coordinate calculation program
- 106: Keyboard
- 107: Display device
- 108: Retroreflective member

## Claims

1. A coordinate input device that comprises an operation detection plane at a position in front of a display surface or projection surface, and that optically detects a coordinate at which an input object with a round tip traverses the operation detection plane, the coordinate input device comprising:
processing means that detects a size of the input object blocking detection light that travels along the operation detection plane;
processing means that generates a down event of the input object when, after blockage of the detection light is initially detected, it is detected that the size has become greater than a first threshold; and
processing means that generates an up event of the input object when, following detection of a maximum value of the size, it is detected that the size has become smaller than a second threshold.

2. The coordinate input device according to claim 1, wherein the first threshold is set to a value that is twice the size as of a point in time at which blockage of the detection light is initially detected.

3. The coordinate input device according to claim 1, wherein the second threshold is set to a value that is one half of the maximum value of the size.

4. The coordinate input device according to claim 1, wherein the first threshold is greater than the second threshold.

5. The coordinate input device according to claim 1, wherein the first threshold is less than the second threshold.

6. A program that causes a computer to execute processes, the computer being adapted to receive information regarding a detected size of an input object from a coordinate input device, the coordinate input device comprising an operation detection plane at a position in front of a display surface or projection surface, the coordinate input device being adapted to optically detect a coordinate at which the input object with a round tip traverses the operation detection plane, the processes comprising:
a process of detecting the size of the input object blocking detection light that travels along the operation detection plane;
a process of generating a down event of the input object when, after blockage of the detection light is initially detected, it is detected that the size has become greater than a first threshold; and
a process of generating an up event of the input object when, following detection of a maximum value of the size, it is detected that the size has become smaller than a second threshold.

7. The program according to claim 6, wherein the first threshold is set to a value that is twice the size as of a point in time at which blockage of the detection light is initially detected.

8. The program according to claim 6, wherein the second threshold is set to a value that is one half of the maximum value of the size.

9. The program according to claim 6, wherein the first threshold is greater than the second threshold.

10. The program according to claim 6, wherein the first threshold is less than the second threshold.
